# EUROPEAN PATENT APPLICATION

(11) **EP 1 285 898 A1**
(43) Date of publication of application: **26.02.2003**
(21) Application number: 02017514.7
(22) Date of filing: 06.08.2002
(51) Int. Cl.: C04B 41/45

(54) **Method for the coating of gypsum containing boards**

(30) Priority: 15.08.2001 DK 200101220
(71) Applicant: DANOGIPS A/S, 2500 Valbybro (DK)
(72) Inventor: Ipsen, Erik, 8541 Skodstrup (DK)
(74) Representative: Carlsen, Niels G.

(57) **Abstract**

Gypsum containing boards, especially plaster-carton, fibre-plaster and plaster boards, are coated electrostatically. It has been shown that gypsum containing boards have an adequate conductivity to enable this.

## Description

The present invention relates to a process for the coating of gypsum containing boards. The process according to the present invention is typically used for electrostatic coating.

Of the gypsum containing boards special mention of plaster-carton boards, fibre-plaster boards and plasterboards should be made.

The usual method for the surface coating of gypsum containing boards is wet coating. Wet coating leaves a good finish but also results in heavily dampening the board. As a result of the drying out of the wet coating a number of distinct zones appear, each one relating to its degree of dryness. The edge areas begin to dry first while the centre of the board is the dampest zone. The differences in moisture content result in a bending of the board towards the covered surface. Contra-lamination where a laminate surface is applied to the opposite side, as used in the furniture industry, can, to a certain extent, eliminate these differences.

The application of a dry coating can also eliminate this disadvantage. Dry, or powder coating, comprises a material.which can be attributed a positive or a negative charge where the charge is applied immediately before application of the material onto the board, e.g. by way of the spray-nozzle. The powder, which is statically charged, will subsequently be attracted by a material exhibiting an opposite charge. Therefore, the subject wished to be coated is oppositely charged.

The said board and powder is then heated until the powder is liquefied and coalesces, the temperature is maintained throughout the hardening process whereafter the board is sealed by the coating.

For the dry or powdered coating to be achieved, the material which is to be coated must be conductive. If the powder coating is to be applied to a non-conductive material a conductive liquid would first have to be applied - and the accompanying dampness would result in the same negative effects as described above. Metallic products can receive direct spraying - for non-conductive materials a conductive liquid has to be applied to attract the powder.

Gypsum containing boards have until now been considered as non-conductive.

The present invention is based upon the knowledge that gypsum containing boards behave as conductive materials such that a certain potential can create an opposite pole to that of the charged powder.

It should be noted that the present invention should in no way be bound by the following theory to explain why the gypsum containing board exhibits conductive properties, but the theory suggests that a conductive circuit is created by the moisture content within the board which, can be found between the individual gypsum crystals and contains amounts of dissolved CaSO₄.

Tests carried out with the application of the powder have shown that the coating's melting point should not exceed 150°C, just as any later application of high temperatures should be avoided. Time dependence is naturally a factor.

Treatment of the board before the application of the powder with a cooling primer material, e.g. a glue or a primer of the water glass type, can enable liquefying and hardening at higher temperatures.

### Examples.

The following paragraphs contain a description of the methods tested for the application of electrostatic coatings on gypsum containing boards in order to clarify whether such an article can be charged sufficiently and whether a subsequent hardening of the applied powder, without associated defects occurring, can be achieved.

### Example 1

This first test and the test from example 2 were carried out at RANLAK in Randers, Denmark.

Small sections of plaster-board (300mm X 300mm) were used in the test.
The boards tested were:
1. Untreated plaster-carton board.
2. Plaster-carton board with a plastic film laminate.
3. Plaster board treated with water glass glue.

A PE/epoxy-powder was used in the tests. The powder has a liquefying temperature and hardening temperature of between 160 and 200°C.

The test showed that it was possible to apply powder on a plaster-carton board without having to apply a conductive liquid. There was however, a noticeable difference between the boards used: The untreated boards exhibited a slight granulated surface which, is a result of the escape of moisture from the plaster core within the plaster-carton board.

Both the plastic laminated board and the water glass coated board had barrier layers which inhibited the evaporation of moisture from the plaster core and as a result the surface was smoother.

### Example 2

Approximately 100 boards of the 0-series which were already impregnated with water glass were tested.

A metallic powder coating was used in the test where a hardening temperature and heat of 130°C were applied.

The results showed that even troublesome metallic coatings may be applied with good results. However, there was a tendency, as a result of the applied heat during the liquefying and hardening process, for a moderate calcination of the plaster core.

### Example 3

To avoid the calcination, described in example 2, a test was carried out using powder coatings which has a lower liquefying and hardening temperature. The test was carried out at Du Pont powder coatings in Västervik, Sweden.

The aim was to test the newly developed IR/UV coating which liquefies and hardens over a much shorter period of time and at the lower temperature such as between 80 and 120°C and therefore doesn't strain the board as much.

Application was still possible and the following test showed that it was possible without pre-treatment of the boards to achieve a very smooth surface.

### Example 4

A test involving the application of wax was carried out.

The test also led to a subsequent covering of the surface with the powder.

### Conclusion

On the background of the tests carried out it may be deduced that a plaster-carton board or a fibre-plaster board could be charged enough to attract and secure an oppositely charged powder, e.g. a coloured powder.

Subsequently the powder may be liquefied by the application of heat and finally hardened.

## Claims

1. A method for the coating of gypsum containing boards, **characterised in that** the coating application is carried out electrostatically.

2. The method according to claim 1, **characterised in that** the gypsum containing boards are plaster-carton boards.

3. The method according to claim 1, **characterised in that** the gypsum containing boards are fibre plaster boards.

4. The method according to claim 1, **characterised in that** the gypsum containing boards are plaster boards.

5. The method according to claims 1 to 4, **characterised in that** the coating has a melting point of no greater than 150°C.

6. The method according to claims 1 to 4, **characterised in that** the board is treated with a cooling primer material, e.g. a glue or water glass type primer, before the powder is applied.
